# EUROPÄISCHE PATENTSCHRIFT

(11) **EP 3 542 610 B1**
(45) Veröffentlichungstag und Bekanntmachung des Hinweises auf die Patenterteilung: **09.03.2022**
(21) Anmeldenummer: 19151120.3
(22) Anmeldetag: 10.01.2019
(51) Int. Cl.: A01D 41/127, A01D 43/08

(54) **FELDHÄCKSLER**
FORAGE HARVESTER
RAMASSEUSE-HACHEUSE

(30) Priorität: 23.03.2018 DE 102018106915
(43) Veröffentlichungstag der Anmeldung: 25.09.2019
(73) Patentinhaber: CLAAS Selbstfahrende Erntemaschinen GmbH, 33428 Harsewinkel (DE)
(72) Erfinder: Heitmann, Christoph, 48231 Warendorf (DE); Bönig, Ingo, 33330 Gütersloh (DE); Stremlau, Björn, 49509 Recke (DE); Fischer, Frédéric, 59823 Arnsberg (DE); Dammann, Andre, 33428 Harsewinkel (DE); Schiewer, Stefan, 48231 Warendorf (DE); Herter, Felix, 33428 Harsewinkel (DE); Furmaniak, Jan, 48291 Telgte (DE); Kriebel, Bastian, 48155 Münster (DE)

(56) Entgegenhaltungen:
- EP-A1- 0 605 369
- EP-A1- 1 419 687
- EP-A1- 2 965 610
- EP-A1- 2 987 396
- EP-A2- 0 901 928
- CN-A- 104 154 201
- DE-A1- 19 524 752
- US-A1- 2009 260 911

## Beschreibung

Die vorliegende Erfindung betrifft einen Feldhäcksler gemäß dem Oberbergriff des Anspruches 1.

Ein Feldhäcksler der eingangs genannten Art umfasst mehrere Arbeitsorgane zur Durchführung eines Erntegutbearbeitungsprozesses, ein Antriebssystem, welches in einen Hauptantriebsstrang, der mechanisch angetriebene Arbeitsorgane umfasst, und einen Nebenantriebsstrang, der zumindest teilweise hydraulisch angetriebene Arbeitsorgane umfasst, aufgeteilt ist, ein Fahrerassistenzsystem, welches einen Speicher zum Hinterlegen von Daten und eine Rechenvorrichtung zur Verarbeitung von in dem Speicher hinterlegten Daten sowie eine grafische Benutzerschnittstelle aufweist, wobei die Arbeitsorgane zumindest ein einstellbares Erntegutbehandlungsmittel, wenigstens eine Aktuatorik zur Einstellung und/oder Betätigung des zumindest einen Erntegutbehandlungsmittels sowie eine Steuereinheit zur Ansteuerung der Aktuatorik aufweisen.

Die DE 102 41 788 A1 beschreibt einen Feldhäcksler mit einer Häckselvorrichtung, die auf einer rotierend angetriebenen Häckseltrommel über den Umfang verteilt angeordnete Häckselmesser aufweist. Durch die Rotationsgeschwindigkeit der Häckseltrommel wird die Länge des Häckselgutes mitbestimmt, welche von einer Steuereinrichtung in Abhängigkeit von der Feuchtigkeit des Erntegutes anpassbar ist. Die Feuchtigkeit des Erntegutes wird sensorisch bestimmt.

Die DE 10 2011 005 317 B4 hat einen Feldhäcksler mit einer Häckselvorrichtung zum Gegenstand, wobei mittels einer Vorrichtung der Verschleißzustand, insbesondere die Abstumpfung der Schneide von Häckselmessern, bestimmt wird. Darüber hinaus erfolgt mittels der Vorrichtung eine Justierung des Abstandes von Schneide und Gegenschneide der Häckselvorrichtung. Zur Bestimmung der Schärfe der Schneide durchläuft das Häckselmesser ein Feld eines induktiven Sensors, dessen Sensorwerte an eine Auswerteeinheit übertragen werden. In der Auswerteeinheit sind vordefinierte Grenzwerte für die Schärfe hinterlegt, deren Unterschreiten automatisch ein Schärfen der Schneiden der Häckselmesser auslöst oder eine Bedienperson über die Notwendigkeit des Schärfens informiert. Hierzu ist die Auswerteeinheit mit einem Computer des Feldhäckslers verbunden.

Aus der EP 1 380 204 B1 ist ein Feldhäcksler mit einer Nachbeschleunigungsvorrichtung bekannt, welche der Beschleunigung eines aus gehäckseltem Erntegut bestehenden Gutstroms dient, welches entlang eines Förderschachts der Nachbeschleunigungsvorrichtung zugeführt wird. Die Nachbeschleunigungsvorrichtung ist abschnittsweise von einem Gehäuse umgeben, innerhalb dessen die Nachbeschleunigungsvorrichtung mittels eines Achsverschiebemechanismus relativbeweglich ist, um einen Abstand zwischen dem Förderschacht und der Nachbeschleunigungsvorrichtung verändern zu können. Die Veränderung des Abstands erfolgt dabei in Abhängigkeit von Feuchte, Dichte oder Geschwindigkeit des Ernteguts. Die Bestimmung von Feuchte, Dichte oder Geschwindigkeit erfolgt durch einen Sensor, dessen Signale an eine Auswerte- und Recheneinheit übertragen werden. Die Verstellung erfolgt durch eine Aktuatorik, die von der Auswerte- und Recheneinheit angesteuert wird.

Aus EP 2 987 396 A1 ist ein gattungsgemäßer Feldhäcksler bekannt.

Aus dem Stand der Technik ist es somit für einen Feldhäcksler bekannt, Arbeitsorgane, die zumindest ein einstellbares Erntegutbehandlungsmittel, wenigstens eine Aktuatorik zur Einstellung und/oder Betätigung des zumindest einen Erntegutbehandlungsmittels sowie eine Steuereinheit zur Ansteuerung der Aktuatorik aufweisen, sensorisch zu überwachen und die Aktuatorik in Abhängigkeit von einem sensorisch erfassten Betriebs- oder Ernteprozessparameter anzusteuern. Dabei handelt es sich um Steuerkreise, die in sich geschlossen sind und autark arbeiten. Das heißt, dass etwaige Wechselwirkungen an einem Arbeitsorgan vorgenommener Einstellungen auf die Arbeitsweise und Qualität anderer Arbeitsorgane unberücksichtigt bleiben. Dies hat insbesondere den Nachteil, dass der Feldhäcksler in seiner Leistungsfähigkeit nicht voll ausgenutzt werden kann.

Aufgabe der vorliegenden Erfindung ist es, einen Feldhäcksler der eingangs genannten Art weiterzubilden, der sich durch eine gesteigerte Effizienz, insbesondere durch eine optimierte Gesamtleistungsaufnahme, auszeichnet.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird ein Feldhäcksler vorgeschlagen, der mehrere Arbeitsorgane zur Durchführung eines Erntegutbearbeitungsprozesses sowie ein Antriebssystem, welches in einen Hauptantriebsstrang, der mechanisch angetriebene Arbeitsorgane umfasst, und einen Nebenantriebsstrang, der mechanisch und/oder hydraulisch angetriebene Arbeitsorgane umfasst, aufgeteilt ist, umfasst. Weiterhin umfasst der Feldhäcksler ein Fahrerassistenzsystem, welches einen Speicher zum Hinterlegen von Daten und eine Rechenvorrichtung zur Verarbeitung von in dem Speicher hinterlegten Daten sowie eine grafische Benutzerschnittstelle aufweist. Die Arbeitsorgane weisen jeweils zumindest ein einstellbares Erntegutbehandlungsmittel, wenigstens eine Aktuatorik zur Einstellung und/oder Betätigung des zumindest einen Erntegutbehandlungsmittels sowie eine Steuereinheit zur Ansteuerung der Aktuatorik auf. Erfindungsgemäß ist zur Steigerung der Effizienz des Feldhäckslers vorgesehen, dass die das jeweilige Arbeitsorgan bildenden zumindest eine einstellbare Erntegutbehandlungsmittel, die wenigstens eine Aktuatorik zur Einstellung und/oder Betätigung des zumindest einen Erntegutbehandlungsmittels sowie die Steuereinheit zur Ansteuerung der Aktuatorik jeweils einen Einstellautomat bilden, wobei durch das Fahrerassistenzsystem die Arbeitsweise jedes Einstellautomaten für sich genommen oder in Abhängigkeit von zumindest einem weiteren Einstellautomaten optimierbar ist, und wobei das Fahrerassistenzsystem dazu eingerichtet ist, dem jeweiligen Einstellautomaten ein durch zumindest eine Sensoranordnung bestimmbares durchsatzproportionales Belastungssignal des Antriebsystems zuzuführen. Durch die Detektion von Belastungsänderungen im Antriebssystem und die Übermittlung der diese wiedergebenden durchsatzproportionalen Belastungssignale durch das Fahrerassistenzsystem an alle Einstellautomaten, lässt sich eine zeitnahe Anpassung der Betriebsparameter durch den jeweiligen Einstellautomaten eines Arbeitsorgans vornehmen, um dessen Betrieb kontinuierlich zu optimieren. Dabei lässt sich auch das Verhältnis von Gesamtleitungsaufnahme und Durchsatz optimieren. Im Zuge dessen lassen sich eine Gesamtleistungsaufnahme des Feldhäckslers und deren zeitlicher Verlauf bestimmen. Aufgrund von Durchsatzschwankungen auftretende Wechselwirkungen zwischen den Arbeitsorganen werden bei der Einstellung bzw. Anpassung der Betriebsparameter durch den jeweiligen Einstellautomaten berücksichtigt. So führt eine Zunahme der aufgenommenen Erntegutmenge grundsätzlich zu einem erhöhten Gesamtleistungsbedarf des Feldhäckslers, der sich jedoch unterschiedlich auf die verschiedenen Arbeitsorgane aufteilen kann.

Insbesondere kann das Fahrerassistenzsystem zur Optimierung der Arbeitsweise der einzelnen Arbeitsorgane in dem Speicher hinterlegte, auswählbare arbeitsorganspezifische Strategien aufweisen. Die individuelle Auswählbarkeit von arbeitsorganspezifischen Strategien bietet den Vorteil, dass hierdurch eine Vorgabe erfolgt, welcher Schwerpunkt bei der Optimierung der Arbeitsweise angestrebt wird. So können die arbeitsorganspezifischen Strategien beispielsweise als Zielstellungen "Effizienz", "Kosten", "Leistung" sowie "Arbeitsqualität" aufweisen. Die vorstehende Aufzählung ist als nicht abschließend zu verstehen. Diese Zielstellungen arbeitsorganspezifischer Strategien können entsprechend des jeweils zu optimieren Arbeitsorgans variieren, da nicht für alle Arbeitsorgane identische Zielstellungen respektive Strategien vorgesehen sein können.

Hierzu können die auswählbaren arbeitsorganspezifischen Strategien jeweils auf eine Zielvorgabe der Einstellung oder der Optimierung mindestens eines Ernteprozessparameters durch Vorgabe zumindest eines Betriebsparameters zumindest eines der Arbeitsorgane gerichtet sein. Als Ernteprozessparameter werden qualitativ und quantitativ bestimmbare Arbeitsergebnisse von einzelnen Arbeitsorganen bis hin zum Arbeitsergebnis des Feldhäckslers in seiner Gesamtheit angesehen, beispielsweise Verdichtbarkeit von Erntegut, Flächenleistung, Silierbarkeit von Erntegut, Leistungsbedarf und dergleichen mehr, welche durch einen oder mehrere Betriebsparameter zumindest eines der Arbeitsorgane beeinflusst werden.

Art und Umfang einer Optimierung der jeweiligen Leistungsaufnahme durch die Arbeitsorgane wird durch die im Zuge einer ausgewählten organspezifischen Strategie angestrebte Zielvorgabe bestimmt.

Gemäß dem Anspruch 2 kann zur Bestimmung zumindest eines durchsatzproportionalen Belastungssignals zumindest einem Arbeitsorgan in dem Hauptantriebsstrang zumindest eine Sensoranordnung zugeordnet sein, um Veränderungen in der Leistungsaufnahme des zumindest einen Arbeitsorgans zu detektieren. Vorteilhaft ist dabei, dass anhand der durch die Sensoranordnung bestimmten durchsatzproportionalen Belastungssignale auf die Leistungsaufnahme sowie auf Veränderungen in der Leistungsaufnahme des zumindest einen Arbeitsorgans geschlossen werden. So kann mittels der zumindest einen Sensoranordnung eine Überwachung des Arbeitsorgans durchgeführt werden, um Veränderungen der Leistungsaufnahme aufgrund von Verschleiß zu detektieren. Hierzu kann ein Vergleich der aktuell erfassten durchsatzproportionalen Belastungssignale mit gespeicherten älteren Belastungssignalen durchgeführt werden, welche unter im Wesentlichen gleichen Betriebsbedingungen erfasst wurden. Eine sich daraus ergebende signifikante Zunahme der Leistungsaufnahme des Arbeitsorgans, beispielsweise einer Häckselvorrichtung des Feldhäckslers, kann ein Indiz für eine abnehmende Schneidschärfe der Häckselmesser sein. Das Zuordnen von jeweils einer Sensoranordnung zu allen von dem Antriebsriemen des Hauptantriebsstranges angeordneten Arbeitsorganen bietet die Möglichkeit einer Bilanzierung der Leistungsaufnahme des Feldhäckslers.

Zudem kann somit zumindest einem Einstellautomaten eines von dem Hauptantriebsstrang angetriebenen Arbeitsorgans das durchsatzproportionale Belastungssignal zugeführt werden. Auf diese Weise kann die Leistungsaufnahme zumindest eines Teilprozesses der Verarbeitung in dem Feldhäcksler und des Transport durch den Feldhäcksler bestimmt und ausgewertet werden. Die Auswertung insbesondere mehrerer Teilprozesse hinsichtlich ihrer Leitungsaufnahme sowie die Berücksichtigung von bestehenden Wechselwirkungen zwischen den für die Durchführung von Teilprozessen vorgesehenen Arbeitsorganen bietet die Möglichkeit, den Gesamtprozess im laufenden Betrieb zu optimieren. So können die generierten Belastungssignal, welche eine Änderung der Leistungsaufnahme des Arbeitsorgans Häckselvorrichtung als einem großen Leistungsaufnehmer aufgrund einer Veränderung des Durchsatzes an Erntegut repräsentieren, herangezogen werden, um an die Einstellautomaten der von dem Nebenantriebsstrang angetriebenen Arbeitsorgane Vorsatzgerät und Einzugsvorrichtung sowie der Häckselvorrichtung weitergeleitet zu werden. In Reaktion auf die bereitgestellten Belastungssignale optimieren die Einstellautomaten entsprechend die Betriebsparameter des jeweiligen Arbeitsorgans in aufeinander abgestimmte Weise. Dies geschieht dabei unter Berücksichtigung der ausgewählten organspezifischen Strategie.

Weiterhin kann zur Bestimmung zumindest eines durchsatzproportionalen Belastungssignals zumindest einem Arbeitsorgan in dem Nebenantriebsstrang zumindest eine Sensoranordnung zugeordnet sein. In Verbindung mit der dem Hauptantriebsstrang zugeordneten zumindest einen Sensoranordnung wird eine Bilanzierung der Gesamtleistungsaufnahme ermöglicht.

Insbesondere kann die zumindest eine Sensoranordnung dazu eingerichtet sein, von dieser aufgenommene Messsignale an das Fahrerassistenzsystem zur Generierung von Belastungssignalen zu übermitteln. Das Fahrerassistenzsystem kann durch Auswertung der Messsignale die jeweiligen Belastungssignale generieren und den jeweiligen Einstellautomaten zuführen. Dabei kann die Übermittelung der Belastungssignale durch das Fahrerassistenzsystem auf die Einstellautomaten beschränkt werden, die in unmittelbarer Wechselwirkung miteinander stehen.

Des Weiteren können die Einstellautomaten dazu eingerichtet sein, die Belastungssignale bei der Optimierung des Leistungsbedarfs des jeweiligen Arbeitsorgans zu verwenden.

Dabei kann die zumindest eine Sensoranordnung zur indirekten Messung der Belastung des Antriebssystems eingerichtet sein. Indirekte Messungen haben den Vorteil, dass diese in der Regel kostengünstiger durchführbar, da Sensoranordnungen, die direkt messen, oftmals aufwendiger sind und eine Manipulation am Messpunkt erfordern, um die Messgröße direkt erfassen zu können. Je nach Ausführung der indirekten Messungen können konstruktive Eingriffe in das Antriebssystem weitgehend oder vollständig vermieden werden.

Besonders bevorzugt kann die zumindest eine Sensoranordnung zur Bestimmung von Dehnungsschlupf in einem Antriebsriemen des Hauptantriebsstrangs eingerichtet sein. Hierbei kann eine Abweichung des Übersetzungsverhältnisses aufgrund stärkerer Dehnung im Zugtrum bzw. Lasttrum des Antriebsriemens vor dem von einer Riemenscheibe angetriebenen Arbeitsorgan gegenüber dem Leertrum hinter dem Arbeitsorgan bestimmt werden. Das an den jeweiligen Riemenscheiben anliegende Drehmoment ist proportional zum Dehnungsschlupf, so dass auf das Drehmoment geschlossen werden kann. Zur Bestimmung des Dehnungsschlupfes kann eine Geschwindigkeitsdifferenz des Antriebsriemens vor und hinter der Riemenscheibe durch die Sensoranordnung bestimmt werden. Ein wesentlicher Vorteil dieser Sensoranordnung besteht in der Echtzeitfähigkeit der Messungen

Hierzu kann die zumindest eine Sensoranordnung zumindest eine einer Riemenscheibe des zumindest einen Arbeitsorgans im Hauptantriebsstrang nachgeordnete Laufrolle umfassen, deren Drehzahl sensorisch erfasst wird, und dass die Drehzahl der Riemenscheibe des Arbeitsorgans mittelbar oder unmittelbar sensorisch erfassbar ist. Aus der Erfassung der Drehzahlen von Laufrolle und Riemenscheibe ist eine Drehzahldifferenz bestimmbar, welche einen Rückschluss auf den Dehnungsschlupf in dem Antriebsriemen ermöglicht. Insbesondere kann die Laufrolle im Hauptantriebsstrang in einer Weise positioniert sein, so dass ein permanenter Kontakt zu dem Antriebsriemen gewährleistet ist. Dadurch soll ein Abreißen des Kontakts zwischen der Laufrolle und dem Antriebsriemen aufgrund von auftretenden Schwingungen verhindert werden. Insbesondere erfolgt die Erfassung der Drehzahl der Riemenscheibe mittelbar durch eine Drehzahlerfassung des von dieser angetriebenen Arbeitsorgans. Hierzu kann ein Drehzahlsensor vorgesehen sein. Diese Ausbildung der Sensoranordnung hat den Vorteil, dass bauliche Eingriffe in den Antriebsstrang minimiert werden können. Zudem zeichnet sich diese Ausbildung der zumindest einen Sensoranordnung zur Bestimmung der Leistungsaufnahme durch einen einfachen, kompakten und robusten Aufbau aus. Ein zur Erfassung der Drehzahl erforderlicher Drehzahlsensor ist kostengünstig. So kann die Zuordnung von jeweils einer Laufrolle zu jedem der von dem Antriebsriemen angetriebenen Arbeitsorgane vorgenommen werden.

Gemäß einer bevorzugten Weiterbildung kann die zumindest eine Sensoranordnung zur Bestimmung von Biegeschwingungen in einem Antriebsriemen des Hauptantriebsstrangs eingerichtet sein. Die kontinuierlich erfassten Riemenschwingungen können einer Frequenzanalyse unterzogen werden, um die Frequenz der Riemenschwingungen des Antriebsriemens vor und hinter der Riemenscheibe des von dieser angetriebenen Arbeitsorgans zu bestimmen. Die Bestimmung der Frequenzen der Riemenschwingungen des Antriebsriemens ermöglicht es, auf eine Differenz der Trumkräfte vor und hinter der Riemenscheibe zu schließen, was zur Bestimmung des Drehmoments benötigt wird.

Dabei kann die zumindest eine Sensoranordnung zwei Abstandssensoren umfasst, wobei jeweils ein Abstandssensor dem Leertrum vor dem zumindest einen Arbeitsorgan und dem Lasttrum hinter dem zumindest einen Arbeitsorgan zugeordnet sein, mittels derer eine Auslenkung des Antriebsriemens des Hauptantriebsstrangs bestimmbar ist. Der jeweilige Abstandssensor ist bevorzugt als berührungslos arbeitender Sensor ausgeführt. Die Anordnung der beiden Abstandssensoren der zumindest einen Sensoranordnung kann sowohl auf der Außenseite als auch der Innenseite des Antriebsriemens oder wechselseitig erfolgen, um die durch die Riemenschwingungen des Antriebsriemens verursachten Abstandsänderungen zu erfassen. Die Variante der zumindest zwei Abstandssensoren umfassenden Sensoranordnung zeichnet sich vor allem durch einen geringen Integrationsaufwand in den Hauptantriebsstrang aus.

Eine vorteilhafte Weiterbildung sieht vor, dass die zumindest eine Sensoranordnung zur Bestimmung einer hydraulischen Leistung von zumindest einem in dem Nebenantriebsstrang angeordneten Hydraulikmotor eingerichtet sein kann. Der Nebenantriebsstrang dient dem Antrieb von als Vorsatzgerät und Einzugsvorrichtung ausgebildeten Arbeitsorganen des Feldhäckslers. Dabei kann der Antrieb von Vorsatzgerät und Einzugsvorrichtung leistungsverzweigt, mechanisch durch den Hauptantriebsstrang und zusätzlich hydrostatisch, erfolgen oder rein hydrostatisch. Der Antrieb des Hydraulikmotors erfolgt durch eine Druckdifferenz zwischen Druck- und Saugleitung. Der Volumenstrom wird von einer Hydraulikpumpe bereitgestellt, deren Antriebswelle mit einer Riemenscheibe trieblich verbunden ist, welche von dem Antriebsriemen des Hauptantriebsstrangs angetrieben wird. Die Hydraulikpumpe ist bevorzugt als eine im Schluckvolumen verstellbare Axialkolbenpumpe ausgeführt.

Hierzu kann dem zumindest einen Hydraulikmotor jeweils ein Drucksensor vor- und nachgeschaltet sein. So kann die Druckdifferenz am Ein- und Ausfluss des Hydraulikmotors gemessen werden.

Insbesondere kann der Hydraulikmotor als ein Konstantmotor ausgeführt sein. Dies hat den Vorteil, dass das Schluckvolumen des Hydraulikmotors konstant ist, so dass die Leistung des Hydraulikmotors anhand der Druckdifferenz und der Drehzahl der Hydraulikpumpe bestimmbar ist.

Die vorliegende Erfindung wird nachstehend anhand von in den Zeichnungen dargestellten Ausführungsbeispielen näher erläutert.

Es zeigen:
- Fig. 1: eine schematische Darstellung eines selbstfahrenden Feldhäckslers in Seitenansicht;
- Fig. 2: eine schematische Darstellung der Struktur eines Einstellautomaten;
- Fig. 3: eine schematische Übersicht der Struktur eines Fahrerassistenzsystems;
- Fig. 4: eine schematische Teilansicht eines Hauptantriebstranges eines Antriebssystems mit einer Sensoranordnung zur indirekten Messung der Belastung;
- Fig. 5: eine schematische Ansicht des Hauptantriebstranges mit einer Sensoranordnung gemäß einer zweiten Ausführungsform zur indirekten Messung der Belastung;
- Fig. 6: eine schematische Ansicht eines Nebenantriebstranges des Antriebssystems mit einer Sensoranordnung gemäß einer dritten Ausführungsform zur indirekten Messung der Belastung.

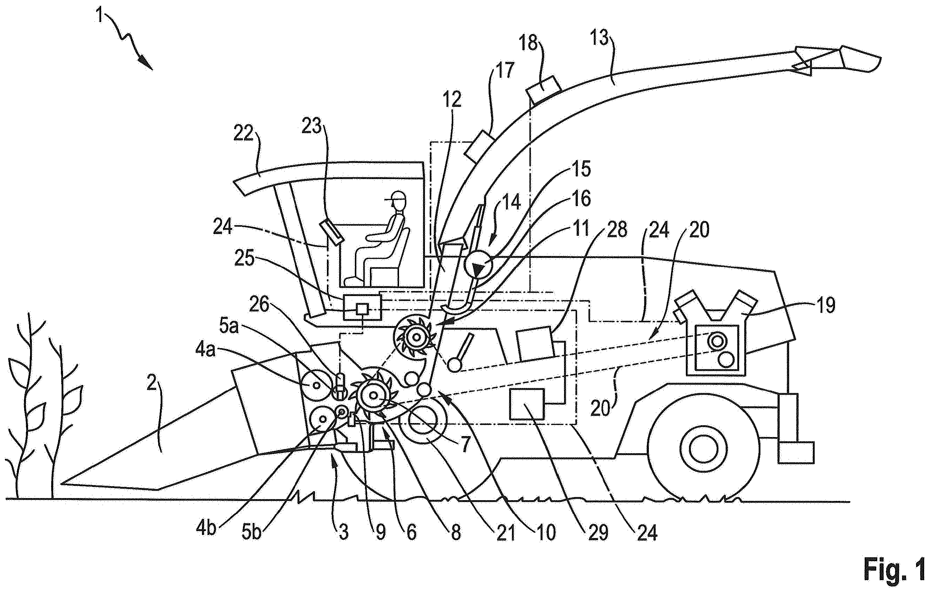

In Fig. 1 ist eine schematische Darstellung eines selbstfahrenden Feldhäckslers 1 in Seitenansicht gezeigt. Der Feldhäcksler 1 weist ein Vorsatzgerät 2 zum Ernten von, insbesondere stängeligem, Erntegut auf. Das Vorsatzgerät 2 kann unter anderem als sogenanntes Maisgebiss oder als Maispflücker ausgebildet sein. Für das Ernten von Gras kann das Vorsatzgerät 2 als ein Mähwerk ausgeführt sein.

Das von dem Vorsatzgerät 2 aufgenommene Erntegut wird einer Einzugsvorrichtung 3 zugeführt. Die Einzugsvorrichtung 3 umfasst zumindest ein erstes Paar Walzen 4a, 4b und ein zweites Paar Walzen 5a, 5b, die an einem Rahmen oder einem Gehäuse angeordnet sind. Die zumindest zwei Walzenpaare 4a, 4b und 5a, 5b dienen dem Einzug und Vorpressen des aufgenommenen Erntegutes. Die Walzenpaare 4a, 4b und 5a, 5b bilden ein einstellbares Erntegutbehandlungsmittel. So können beispielsweise die Vorpresskraft als auch die Antriebsgeschwindigkeit der Walzenpaare 4a, 4b und 5a, 5b verändert werden, um an sich ändernde Erntegutmengen angepasst zu werden.

Der Einzugsvorrichtung 3 ist eine Häckselvorrichtung 6 nachgeordnet. Die Häckselvorrichtung 6 umfasst eine mit einer Vielzahl von Häckselmessern 8 bestückte, rotierend angetriebene Häckseltrommel 7. Zum Zerkleinern des in Form einer verdichteten Erntegutmatte von der Einzugsvorrichtung 3 zugeführten Erntegutes wirken die mit der Häckseltrommel 7 rotierenden Häckselmesser 8 mit einer ortsfest angeordneten Gegenschneide 9 der Häckselvorrichtung 6 zusammen. Der Abstand der Gegenschneide 9 relativ zum Hüllkreis der Häckselmesser 8 lässt sich ein- bzw. nachstellen. Ein möglichst geringer Abstand trägt zu einem reduzierten Kraftbedarf beim Schneiden und zu einer konstanten Schnittqualität bei. Eine der Häckselvorrichtung 6 zugeordnete -nicht dargestellte - Schleifvorrichtung dient dazu, die Häckselmesser 8 bei Bedarf zu schärfen, um einer sich verschlechternden Häckselqualität wegen stumpfer Häckselmesser sowie einem erhöhten Energiebedarf beim Antrieb der Häckselvorrichtung 6 zu begegnen.

Das aus der Häckselvorrichtung 6 austretende zerkleinerte Erntegut kann einer optional vorgesehenen Nachbearbeitungsvorrichtung 10 zugeführt werden. Die Nachbearbeitungsvorrichtung 10, auch als Konditioniereinrichtung oder Corncracker bezeichnet, dient dem Aufschließen von Maiskörnern, um die Verwertbarkeit bzw. Energieausbeute bei einem Einsatz als Futtermittel bzw. in einer Biogasanlage zu erhöhen. Derartige Nachbearbeitungsvorrichtungen 10 bestehen aus einem Walzenpaar mit profilierten Oberflächen, wobei die Walzen mit unterschiedlichen Drehzahlen angetrieben werden. Das Drehzahlverhältnis des Walzenpaares der Nachbearbeitungsvorrichtung 10 ist variierbar. Der Kornaufschluss wird insbesondere durch eine Spaltweite zwischen den beiden Walzen der Nachbearbeitungsvorrichtung 10 bestimmt. Je geringer die Spaltweite desto höher der Kornaufschluss. Die Spaltweite ist einstellbar. Die Nachbearbeitungsvorrichtung 10 ist bei Bedarf, z.B. bei der Ernte von Gras, aus dem Gutflussweg des Feldhäckslers 1 entfernbar.

Von der Häckselvorrichtung 6 bzw. der optionalen Nachbearbeitungsvorrichtung 10 gelangt das zerkleinerte Erntegut zu einer Nachbeschleunigungsvorrichtung 11, welche das Erntegut durch einen Förderschacht 12 und eine sich daran anschließende als Auswurfkrümmer ausgebildete Auswurfvorrichtung 13 an ein benachbart zu dem Feldhäcksler 1 fahrendes - nicht dargestelltes - Transportfahrzeug überlädt. Im Bereich der Nachbeschleunigungsvorrichtung 11 ist eine Siliermitteldosiervorrichtung 14 angeordnet, die mittels einer Förderpumpe 15 mit veränderlichem Fördervolumen eine Flüssigkeit in den Förderschacht 12 einbringt. Hierzu ist ein in dem Förderschacht 12 endender, sich in Stromrichtung des Ernteguts öffnender Injektor 16 vorgesehen, wodurch die Flüssigkeit in fein verspritzter Form auf das vorbeiströmende Erntegut appliziert wird. An der Auswurfvorrichtung 13 ist zumindest ein Sensor 17 angeordnet, welcher zumindest zur Bestimmung des Feuchtigkeitsgehalts des zerkleinerten Erntegutes respektive der Trockenmasse eingerichtet ist. Der zumindest eine Sensor 17 kann als NIR-Sensor ausgeführt sein, welcher auch zur Detektion von Inhaltsstoffen wie Rohasche oder Rohproteingehalt des vorbeiströmenden Erntegutes eingerichtet ist. Die Zuordnung eines oder mehrerer weiterer Sensoren 18 zur Bestimmung der Häcksellänge, der Strömungsgeschwindigkeit des Erntegutes und/oder des Massenstroms des vorbeiströmenden Erntegutes zu der Auswurfvorrichtung 13 ist vorsehbar.

Zum Antreiben des Feldhäckslers 1 ist eine als Verbrennungsmotor ausgebildete Antriebsvorrichtung 19 vorgesehen. Die Antriebsvorrichtung 19 steht mit einem Antriebssystem 20 trieblich in Verbindung. Das Antriebssystem 20 ist in einen Hauptantriebsstrang, der mechanisch angetriebene Arbeitsorgane umfasst, wie die Häckselvorrichtung 6, die optionale Nachbearbeitungsvorrichtung 10 sowie die Nachbeschleunigungsvorrichtung 11, und einen Nebenantriebsstrang, der mechanisch und/oder hydraulisch angetriebene Arbeitsorgane umfasst, wie das Vorsatzgerät 2 und die Einzugsvorrichtung 3, aufgeteilt.

Mittels eines Antriebsriemens 20a werden die Häckselvorrichtung 6 sowie die Nachbeschleunigungsvorrichtung 11 angetrieben. Die Nachbearbeitungsvorrichtung 10 ist durch einen weiteren Riemen mit der Nachbeschleunigungsvorrichtung 11 trieblich verbunden. Das Vorsatzgerät 2 sowie die Einzugsvorrichtung 3 sind durch den Nebenantriebsstrang antreibbar, welcher mechanisch mit der Häckselvorrichtung 6 gekoppelt sein kann, leistungsverzweigt mechanisch und hydrostatisch betreibbar ist oder unabhängig von der Häckselvorrichtung 6 hydrostatisch betreibbar ist. Für den rein hydrostatischen Antrieb von Vorsatzgerät 2 sowie Einzugsvorrichtung 3 ist eine Hydraulikpumpe 28 vorgesehen, die einen Hydraulikmotor 29 antreibt. Die Hydraulikpumpe 28 ist bevorzugt als eine im Schluckvolumen verstellbare Axialkolbenpumpe ausgeführt. Der Hydraulikmotor 29 ist als Konstantmotor ausgeführt. Weiterhin ist ein, insbesondere hydrostatischer, Fahrantrieb 21 vorgesehen, mit welchem die Fahrgeschwindigkeit des Feldhäckslers 1 regelbar ist.

Der Feldhäcksler 1 weist eine Kabine 22 auf, in der eine Ein-/Ausgabevorrichtung 23 vorgesehen ist, welche einer Bedienperson des Feldhäckslers 1 zur Verfügung steht, um beispielsweise Betriebsparameter ein- und verstellen zu können und um die Bedienperson über aktuelle Betriebs- bzw. Erntebedingungen zu informieren. Die Ein-/Ausgabevorrichtung 23 steht durch ein Bussystem 24 mit einem Fahrerassistenzsystem 25 des Feldhäckslers 1 in Verbindung. Das Bussystem 24 verbindet darüber hinaus die Sensoren 17, 18 an der Auswurfvorrichtung 13 sowie einen Sensor 26 der Einzugsvorrichtung 3 und weitere - in Fig. 1 nicht dargestellte - Sensoren bzw. Sensorsysteme 34 und Aktuatoren 32 zur Überwachung sowie zur Einstellung und/oder Betätigung von Vorsatzgerät 2, Einzugsvorrichtung 3, Häckselvorrichtung 6, Schleifvorrichtung, Nachbearbeitungsvorrichtung 10, Nachbeschleunigungsvorrichtung 11, Siliermitteldosiervorrichtung 14, Auswurfvorrichtung 13 sowie den Fahrantrieb 21, die nachfolgend als Arbeitsorgane 30 bezeichnet werden, mit dem Fahrerassistenzsystem 25. Die Sensoren 17, 18 sowie 26 werden nachfolgend unter dem Begriff Sensorsystem 34 verallgemeinernd beschreiben. Jedes dieser Arbeitsorgane 30 umfasst dabei zumindest ein einstellbares Erntegutbehandlungsmittel 31, mit dem das Erntegut beim Durchlaufen des Erntegutbehandlungsprozesses durch den Feldhäcksler 1 von der Aufnahme durch das Vorsatzgerät 2 bis zur Abgabe durch die Auswurfvorrichtung 13 manipuliert wird. Die wenigstens eine Aktuatorik 32 eines jeweiligen Arbeitsorgans 30 dient dazu, das zumindest eine Erntegutbehandlungsmittel 31 eines Arbeitsorgans 30 entsprechend der jeweils vorliegenden Erntebedingungen einzustellen, zu verstellen und/oder zu betätigen. Die Sensoren bzw. Sensorsysteme 34 überwachen Betriebs- und arbeitsorganspezifische Parameter der Arbeitsorgane 30 bzw. des von diesen behandelten Ernteguts. Unter dem Begriff Erntegutbehandlungsmittel 31 sind unter anderem die Walzenpaare 4a, 4b und 5a, 5b der Einzugsvorrichtung 3, die Häckselmesser 8 der Häckselvorrichtung 6 zu verstehen.

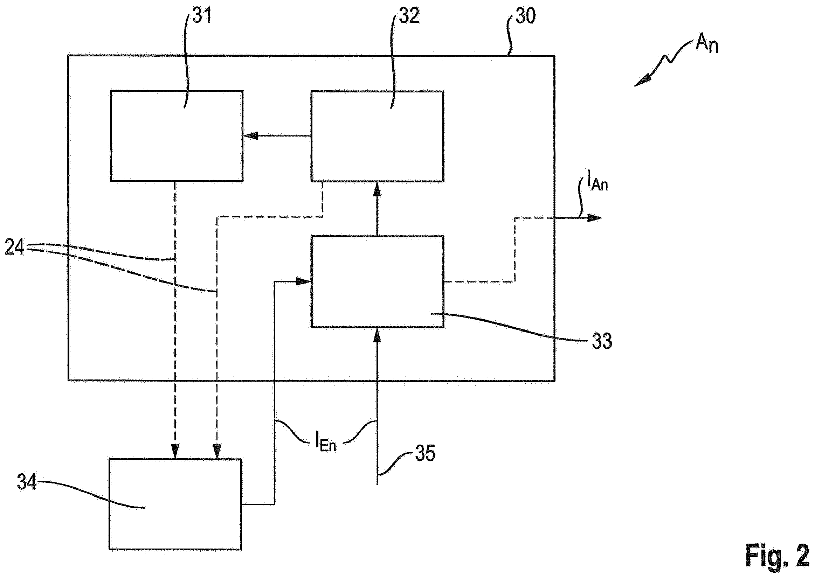

In Fig. 2 ist eine schematische Ansicht der Struktur eines Einstellautomaten Aₙ dargestellt. Das als Einstellautomat Aₙ ausgebildete Arbeitsorgan 30 umfasst zumindest ein Erntegutbehandlungsmittel 31, eine Aktuatorik 32 sowie eine Steuereinheit 33. Von der Steuereinheit 33 werden Steuersignale an die Aktuatorik 32 mittels des Datenbusses 24 übermittelt, durch welche das zumindest eine Erntegutbehandlungsmitte 31 eingestellt wird. Ein Sensorsystem 34 überwacht das zumindest eine Erntegutbehandlungsmitte 31 des Arbeitsorgans 30 und gegebenenfalls die Aktuatorik 32. Das Sensorsystem 34 stellt die von diesem generierten Daten mittels des Bussystems 24 der Steuereinheit 33 zur Auswertung zur Verfügung. Darüber hinaus werden der Steuereinheit 33 externe Informationen 35 bereitgestellt, die beispielsweise von anderen Arbeitsmaschinen und/oder einem zentralen Rechnersystem an den Feldhäcksler 1 übermittelt werden und den Erntegutbehandlungsprozess beeinflussen können. Die von dem Sensorsystem 34 bereitgestellten Daten sowie die externen Informationen 35 bilden Eingangssignale I_{En} des Einstellautomaten Aₙ. Mit I_{An} sind Ausgangssignale des Einstellautomaten Aₙ bezeichnet. Der Einstellautomat Aₙ optimiert die Arbeitsweise des Arbeitsorgans 30 autonom, d.h. der Einstellautomat Aₙ ist dazu eingerichtet, die erforderlichen Einstellungen von Betriebsparametern des Arbeitsorgans 30 kontinuierlich autonom zu bestimmen und vorzugeben. Durch den Einstellautomat Aₙ werden an die jeweils vorliegenden Betriebs- und Erntebedingungen optimal angepasste Betriebsparameter bereitgestellt.

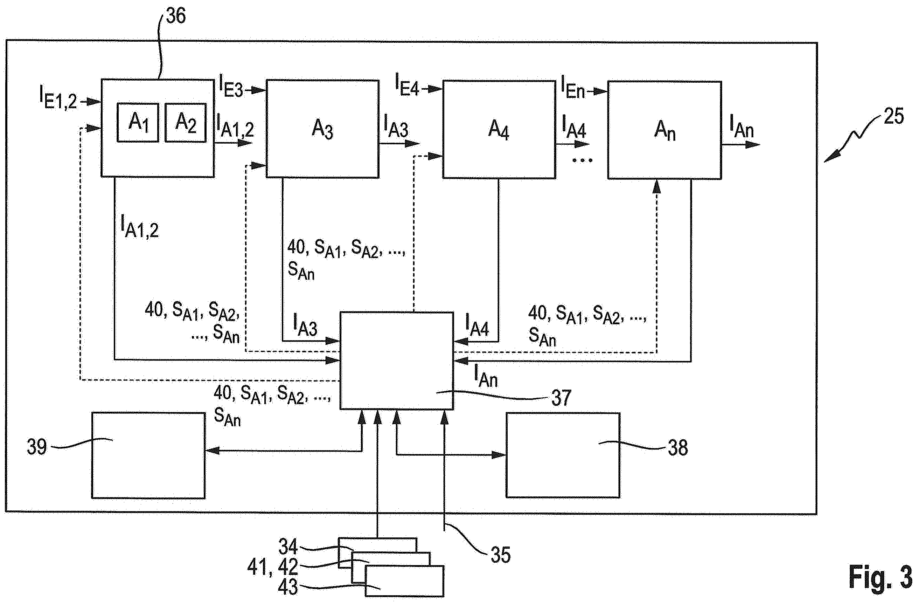

Die Darstellung in Fig. 3 zeigt eine schematische Übersicht der Struktur des Fahrerassistenzsystems 25. Das Fahrerassistenzsystem 25 umfasst mehrere Einstellautomaten A₁, A₂, A₃, A₄, ..., Aₙ. Prinzipiell arbeitet jeder der Einstellautomaten A₁, A₂, A₃, A₄, ..., Aₙ autark. Jedoch ist es denkbar zwei Einstellautomaten A₁, A₂ zu einer Einheit zusammenzufassen, wie beispielhaft in Fig. 3 angedeutet. Das Zusammenfassen zweier Einstellautomaten A₁, A₂ ist dann sinnvoll, wenn die unmittelbare Wechselwirkung respektive Abhängigkeit zwischen diesen beiden Einstellautomaten A₁, A₂ eine jeweils autarke Optimierung keinen Mehrwert liefert. So werden bei dem Feldhäcksler 1 der als Vorsatzgeräteautomat ausgeführte Einstellautomat A₁, welcher der Optimierung der Betriebsparameter des Vorsatzgerätes 2 dient, und der als Einzugsautomat ausgeführte Einstellautomat A₂, welcher der Optimierung der Betriebsparameter der Einzugsvorrichtung 3 dient, zu einem gemeinsamen Einstellautomaten zusammengefasst, der als Zuführautomat 36 bezeichnet wird. Weitere Einstellautomaten sind ein Häckselautomat A₃, ein Nachbearbeitungsautomat A₄, sowie ein Nachbeschleunigungsautomat A₅. Weitere Einstellautomaten sind denkbar.

Das Fahrerassistenzsystem 25 umfasst eine Rechenvorrichtung 37, einen Speicher 38 sowie eine grafische Benutzerschnittstelle 39. Die Rechenvorrichtung 37 ist zur Verarbeitung von in dem Speicher 38 hinterlegten Daten eingerichtet. Darüber hinaus empfängt und verarbeitet die Rechenvorrichtung 37 des Fahrerassistenzsystems 25 Daten der Sensorsystem 34 sowie bereitgestellte externe Informationen 35.

Das Fahrerassistenzsystem 25 weist in dem Speicher 38 und/oder in einer Speichereinheit der Steuereinheiten 33 der Einstellautomaten A₁, A₂, A₃, A₄, ..., Aₙ hinterlegte Regelwerke auf, die den jeweiligen Einstellautomaten A₁, A₂, A₃, A₄, ..., Aₙ zugeordnet sind. Das dem jeweiligen Einstellautomaten A₁, A₂, A₃, A₄, ..., Aₙ zugeordnete Regelwerk bewirkt eine Optimierung der Arbeitsweise des jeweiligen Arbeitsorgans 30 unabhängig von der Arbeitsweise der anderen Arbeitsorgane 30. Die Regelwerke umfassen Expertenwissen sowie adaptierbare Kennlinien oder Kennlinienfelder.

In das steuerungshierarchisch übergeordnete Fahrerassistenzsystem 25 sind die Einstellautomaten A₁, A₂, A₃, A₄, ..., Aₙ integriert, wobei durch das Fahrerassistenzsystem 25 die Arbeitsweise jedes Einstellautomaten A₁, A₂, A₃, A₄, ..., Aₙ für sich genommen oder in Abhängigkeit von zumindest einem weiteren Einstellautomaten A₁, A₂, A₃, A₄, ..., Aₙ optimierbar ist. So werden von dem übergeordneten Fahrerassistenzsystem 25 jedem Einstellautomaten A₁, A₂, A₃, A₄, ..., Aₙ korrespondierende Eingangssignale I_{E1}, I_{E2}, I_{E3}, I_{E4}, ..., I_{En} bereitgestellt, die entsprechend dem jeweiligen Regelwerk der Einstellautomaten A₁, A₂, A₃, A₄, ..., Aₙ verarbeitet werden. Zur Optimierung der Arbeitsweise des jeweiligen Einstellautomaten A₁, A₂, A₃, A₄, ..., Aₙ wird ein Ausgangssignal I_{A1}, I_{A2}, I_{A3}, I_{A4}, ..., I_{An} generiert, welches der Ansteuerung der jeweiligen Aktuatorik 32 des von dem Einstellautomaten A₁, A₂, A₃, A₄, ..., Aₙ angesteuerten Arbeitsorgans 30 dient. Darüber hinaus werden die Ausgangssignale I_{A1}, I_{A2}, I_{A3}, I_{A4}, ..., I_{An} an die Rechenvorrichtung 37 des Fahrerassistenzsystems 25 übertragen. Das Fahrerassistenzsystem 25 stellt die Ausgangssignale I_{A1}, I_{A2}, I_{A3}, I_{A4}, ..., I_{An} als zusätzliche Steuereingangssignale S_{A1}, S_{A2}, S_{A3}, S_{A4}, ..., S_{An} den anderen Einstellautomaten A₁, A₂, A₃, A₄, ..., Aₙ zur Verfügung. Dadurch stehen dem Fahrerassistenzsystem 25 und den Einstellautomaten A₁, A₂, A₃, A₄, ..., Aₙ zusätzliche Informationen zur Verfügung, wodurch es ermöglicht wird, auftretende Wechselwirkungen aufgrund von geänderten Einstellungen eines Arbeitsorgans 30 auf ein oder mehrere andere Arbeitsorgane 30 bei deren Optimierung zu berücksichtigen.

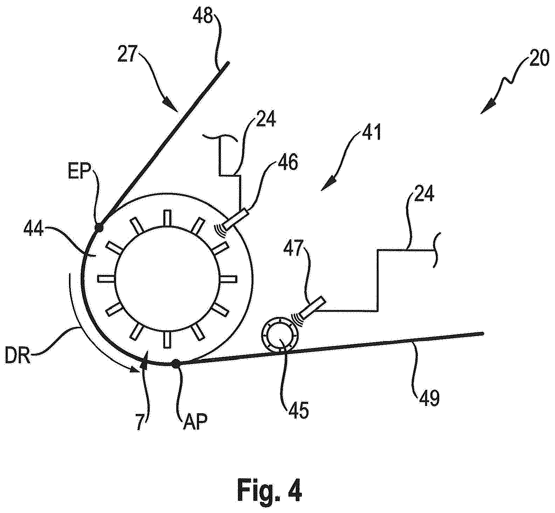

Durch die Detektion von Belastungsänderungen im Antriebssystem 20 und die Übermittlung der diese wiedergebenden durchsatzproportionalen Belastungssignale 40 durch das Fahrerassistenzsystem 25 an alle Einstellautomaten A₁, A₂, A₃, A₄, ..., Aₙ, lässt sich eine zeitnahe Anpassung der Betriebsparameter durch den jeweiligen Einstellautomaten A₁, A₂, A₃, A₄, ..., Aₙ eines Arbeitsorgans 30 vornehmen, um dessen Betrieb kontinuierlich zu optimieren. Hierzu ist zur Bestimmung eines jeweiligen Belastungssignals 40 in dem Hauptantriebsstrang und/oder in dem Nebenantriebsstrang diesen zumindest eine Sensoranordnung 41, 42, 43 zugeordnet, was in den Fig. 4 bis 6 veranschaulicht wird. Die Sensoranordnungen 41, 42, 43 sind jeweils zur indirekten Messung der Belastung in dem Antriebssystem 20 eingerichtet.

Fig. 4 zeigt eine Teilansicht des Hauptantriebstranges des Antriebssystems 20 mit einer Sensoranordnung 41 zur indirekten Messung der Belastung, welche zur Bestimmung von Dehnungsschlupf in dem Antriebsriemen 20a vor und hinter einer Riemenscheibe 44 des Hauptantriebsstrangs eingerichtet ist, durch den die Häckseltrommel 7 angetrieben wird. Ein Pfeil DR gibt die Rotationsrichtung der dem Abtrieb dienenden Riemenscheibe 44 wieder. Die Sensoranordnung 41 umfasst eine Laufrolle 45, welche am Lasttrum 49 des Antriebsriemens 20a anliegt und von diesem angetrieben wird. Die Positionierung der Laufrolle 45 erfolgt dabei in der möglichst unmittelbaren Nähe zu der Riemenscheibe 44, um die Riemengeschwindigkeit am Auslaufpunkt AP der Häckseltrommel 8 messen zu können. Die Laufrolle 45 ist im Wesentlichen unbelastet, um das Auftreten von Schlupf zu vermeiden. Die Umfangsgeschwindigkeit der Laufrolle 45 entspricht somit im Wesentlichen der Riemengeschwindigkeit am Auslaufpunkt AP. Um die Drehzahl der Laufrolle 45 zu messen, ist ein Sensor 47, insbesondere ein Hall-Sensor, vorgesehen. Zur Erfassung der Drehzahl der Häckseltrommel 7 kommt ein weiterer Sensor 46, der ebenfalls als Hall-Sensor ausgebildet ist, zum Einsatz. Die Sensoren 46, 47 stehen durch das Bussystem 24 mit dem Fahrerassistenzsystem 25 signaltechnisch in Verbbindung. Das Fahrerassistenzsystem 25 wertet die von den Sensoren 46, 47 empfangenen Signale der Drehzahlen aus.

Anhand der Drehzahl der Häckseltrommel 7 lässt sich die Riemengeschwindigkeit im Einlaufpunkt EP vom Leertrum 48 des Antriebsriemens 20a bestimmen. Aus der Differenz der Riemengeschwindigkeiten zwischen dem Einlaufpunkt EP und dem Auslaufpunkt AP kann der auftretende Dehnungsschlupf bestimmt werden, welcher wiederum mit dem von der Häckselvorrichtung 6 aufgenommenen Drehmoment korreliert, so dass auf die Leistungsaufnahme der Häckselvorrichtung 6 geschlossen werden kann. Durch die kontinuierliche Messung mittels der Sensoranordnung 41 werden von dem Fahrerassistenzsystem 25 die durchsatzproportionale Belastungssignale 40 generiert und den Einstellautomaten A₁, A₂, A₃, A₄, ..., Aₙ zur Verfügung gestellt, so dass diese zeitnah auf Änderungen im Durchsatz mit Erntegut reagieren können.

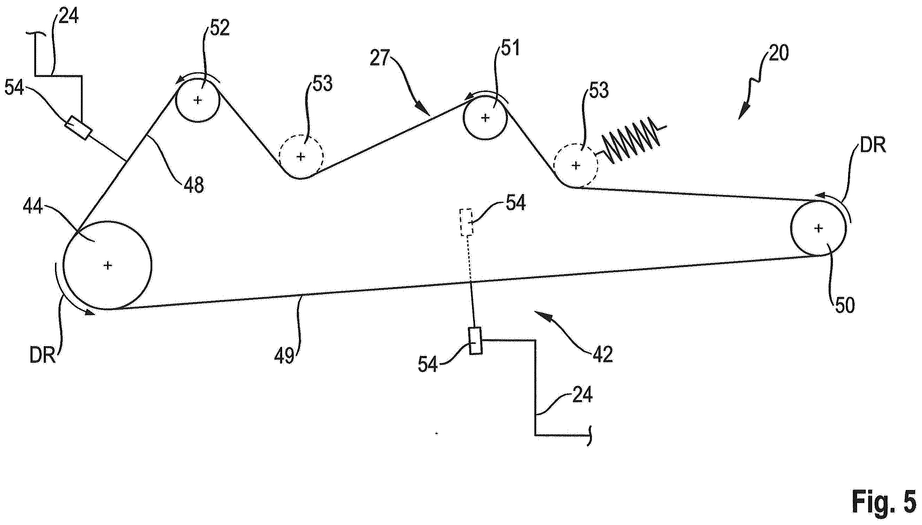

Die Darstellung in Fig. 5 zeigt eine schematische Ansicht des Hauptantriebstranges mit einer Sensoranordnung 42 gemäß einer zweiten Ausführungsform zur indirekten Messung der Belastung. Mit 50 ist eine Antriebsriemenscheibe bezeichnet, welche von der Antriebsvorrichtung 19 angetrieben wird. Spannrollen 53 dienen der Aufrechterhaltung der Riemenspannung Das Antriebsriemens 20a. Durch eine Riemenscheibe 51 wird die Hydraulikpumpe 28 angetrieben. Eine weitere Riemenschiebe 52 treibt die Nachbeschleunigungsvorrichtung 11 sowie die trieblich mit dieser verbundene Nachbearbeitungsvorrichtung 10 an. Die Sensoranordnung 42 ist dazu eingerichtet, Biegeschwingungen in dem Antriebsriemen 20a des Hauptantriebsstrangs zu bestimmen. Hierzu umfasst die Sensoranordnung 42 jeweils einen Abstandssensor 54 im Leertrum 48 vor und im Lasttrum 49 hinter der Arbeitsorgan Häckselvorrichtung 6 angeordnet ist, mittels derer eine Auslenkung des Antriebsriemens 20a des Hauptantriebsstrangs aufgrund von Riemenschwingungen bestimmbar ist. Die kontinuierlich erfassten Riemenschwingungen können einer Frequenzanalyse unterzogen werden, um die Frequenz der Riemenschwingungen des Antriebsriemens vor und hinter der Riemenscheibe des von dieser angetriebenen Arbeitsorgans zu bestimmen. Die Bestimmung der Frequenzen der Riemenschwingungen des Antriebsriemens 20a ermöglicht es, auf eine Differenz der Trumkräfte im Leertrum 48 vor und im Lasttrum 49 hinter der Riemenscheibe 44 zu schließen. Die Differenz der Trumkräfte lässt auf die an die Häckselvorrichtung 6 abgegebene Kraft schließen, welche wiederum zur Bestimmung des Drehmoments benötigt wird.

Dazu ist jeweils ein Abstandssensor 54 dem Leertrum 48 vor und dem Lasttrum 49 hinter der Häckselvorrichtung 6 zugeordnet, mittels derer eine Auslenkung des Antriebsriemens 20a des Hauptantriebsstrangs bestimmbar ist. Die Abstandssensoren 54 sind bevorzugt als berührungslos arbeitende Sensoren ausgeführt, um die durch die Riemenschwingungen verursachten Abstandsänderungen des Antriebsriemens 20a zu erfassen. Die Signale der Abstandssensoren 54 werden zur Auswertung durch das Fahrerassistenzsystem 25 über das Bussystem 24 an dieses weitergeleitet. Das Fahrerassistenzsystem 25 generiert die durchsatzproportionalen Belastungssignale 40 und stellt diese den Einstellautomaten A₁, A₂, A₃, A₄, ..., Aₙ zur Verfügung.

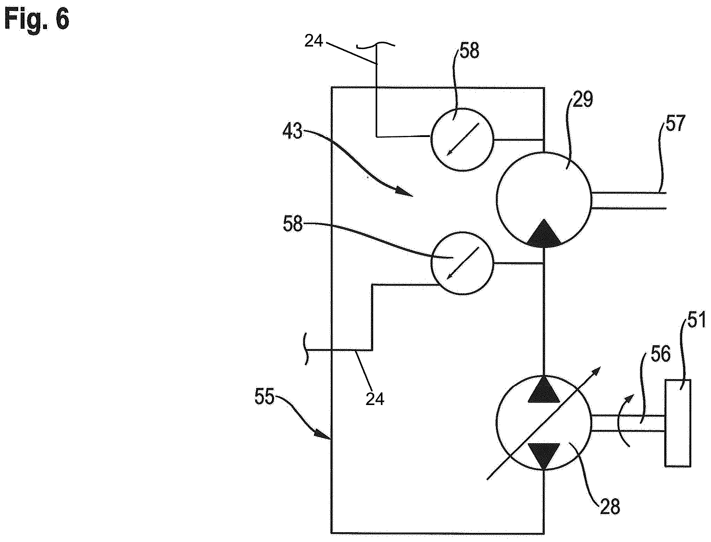

In Fig. 6 ist eine schematische Ansicht des Nebenantriebstranges des Antriebssystems 20 mit einer Sensoranordnung 43 gemäß einer dritten Ausführungsform zur indirekten Messung der Belastung dargestellt. Die Sensoranordnung 43 ist zur Bestimmung einer hydraulischen Leistung von zumindest einem in dem Nebenantriebsstrang angeordneten Hydraulikmotor 29 eingerichtet. Der Antrieb von Vorsatzgerät 2 und Einzugsvorrichtung 3 erfolgt in dem dargestellten Ausführungsbeispiel rein hydrostatisch durch je einen Hydraulikmotor 29. Der Antrieb des Hydraulikmotors 29 erfolgt aufgrund einer Druckdifferenz zwischen Druck- und Saugleitung eines geschlossenen Hydrauliksystems 55, so dass das Schluckvolumen des Hydraulikmotors 29 bei jeder Umdrehung gleich ist. Der Hydraulikmotor 29 weist eine Abtriebswelle 57 auf. Es wird ein konstanter Volumenstrom von der Hydraulikpumpe 28 bereitgestellt, deren Antriebswelle 56 mit der Riemenscheibe 51 trieblich verbunden ist, welche von dem Antriebsriemen 20a des Hauptantriebsstrangs angetrieben wird. Die Hydraulikpumpe 28 ist als eine im Schluckvolumen verstellbare Axialkolbenpumpe ausgeführt, so dass die Drehzahl des oder der Hydraulikmotoren 29 einstellbar ist. Zur Bestimmung der von dem aufgenommen Leistung ist die Kenntnis der Druckdifferenz am Ein- und Ausfluss des Hydraulikmotors 29 erforderlich. Hierzu umfasst das Sensorsystem 43 zwei Drucksensoren 58, die am Ein- und Ausfluss des Hydraulikmotors 29 zur Bestimmung der Druckdifferenz verwendet werden.

Mittels der Abtriebsdrehzahl an der Riemenscheibe 51 der Hydraulikpumpe sowie der Druckdifferenz am Ein- und Ausfluss des Hydraulikmotors 29 lässt sich die aufgenommene Leistung des jeweiligen Hydraulikmotors 29 bestimmen. Wie bereits zuvor im Zusammenhang mit den beiden anderen Ausführungsformen schon ausgeführt, erfolgt die Auswertung durch das Fahrerassistenzsystem 25.

**Bezugszeichenliste**

| | | | |
|---|---|---|---|
| 1 | Feldhäcksler | 29 | Hydraulikmotor |
| 2 | Vorsatzgerät | 30 | Arbeitsorgan |
| 3 | Einzugsvorrichtung | 31 | Erntegutbehandlungsmittel |
| 4a | Walze | 32 | Aktuatorik |
| 4b | Walze | 33 | Steuereinheit |
| 5a | Walze | 34 | Sensorsystem |
| 5b | Walze | 35 | Externe Informationen |
| 6 | Häckselvorrichtung | 36 | Zuführautomat |
| 7 | Häckseltrommel | 37 | Rechenvorrichtung |
| 8 | Häckselmesser | 38 | Speicher |
| 9 | Gegenschneide | 39 | Grafische Benutzeroberfläche |
| 10 | Nachbearbeitungsvorrichtung | 40 | Belastungssignal |
| 11 | Nachbeschleunigungsvorrichtung | 41 | Sensoranordnung |
| 12 | Förderschacht | 42 | Sensoranordnung |
| 13 | Auswurfvorrichtung | 43 | Sensoranordnung |
| 14 | Siliermitteldosiervorrichtung | 44 | Riemenscheibe |
| 15 | Förderpumpe | 45 | Laufrolle |
| 16 | Injektor | 46 | Sensor |
| 17 | Sensor | 47 | Sensor |
| 18 | Sensor | 48 | Leertrum |
| 19 | Antriebsvorrichtung | 49 | Lasttrum |
| 20 | Antriebssystem | 50 | Antriebsriemenscheibe |
| 21 | Fahrantrieb | 51 | Riemenscheibe |
| 22 | Kabine | 52 | Riemenscheibe |
| 23 | Ein-/Ausgabevorrichtung | 53 | Spannrollen |
| 24 | Bussystem | 54 | Abstandssensor |
| 25 | Fahrerassistenzsystem | 55 | Hydrauliksystem |
| 26 | Sensor | 56 | Antriebswelle |
| 27 | Antriebsriemen | 57 | Abtriebswelle |
| 28 | Hydraulikpumpe | 58 | Drucksensor |
| A₁ | Einstellautomat | DR | Rotationsrichtung |
| A₂ | Einstellautomat | EP | Einlaufpunkt |
| A₃ | Einstellautomat | AP | Auslaufpunkt |
| A₄ | Einstellautomat | | |
| Aₙ | Einstellautomat | | |
| I_{E1} | Eingangssignal | | |
| I_{E2} | Eingangssignal | | |
| I_{E3} | Eingangssignal | | |
| I_{E4} | Eingangssignal | | |
| I_{En} | Eingangssignal | | |
| I_{A1} | Ausgangssignal | | |
| I_{A2} | Ausgangssignal | | |
| I_{A3} | Ausgangssignal | | |
| I_{A4} | Ausgangssignal | | |
| I_{An} | Ausgangssignal | | |
| S_{A1} | Steuereingangssignal | | |
| S_{A2} | Steuereingangssignal | | |
| S_{A3} | Steuereingangssignal | | |
| S_{A4} | Steuereingangssignal | | |
| S_{An} | Steuereingangssignal | | |

## Patentansprüche

1. Feldhäcksler (1), umfassend
- mehrere Arbeitsorgane (2, 3, 6, 10, 11, 30) zur Durchführung eines Erntegutbearbeitungsprozesses,
- ein Antriebssystem (20), welches in einen Hauptantriebsstrang, der mechanisch angetriebene Arbeitsorgane (6, 10, 11, 30) umfasst, und einen Nebenantriebsstrang, der zumindest teilweise hydraulisch angetriebene Arbeitsorgane (2, 3) umfasst, aufgeteilt ist,
- ein Fahrerassistenzsystem (25), welches einen Speicher (38) zum Hinterlegen von Daten und eine Rechenvorrichtung (37) zur Verarbeitung von in dem Speicher hinterlegten Daten sowie eine grafische Benutzerschnittstelle (39) aufweist,
**dadurch gekennzeichnet, dass**
die Arbeitsorgane (2, 3, 6, 10, 11, 30) jeweils zumindest ein einstellbares Erntegutbehandlungsmittel (31), wenigstens eine Aktuatorik (32) zur Einstellung und/oder Betätigung des zumindest einen Erntegutbehandlungsmittels (31) sowie eine Steuereinheit (33) zur Ansteuerung der Aktuatorik (32) aufweisen,
wobei die das jeweilige Arbeitsorgan (2, 3, 6, 10, 11, 30) bildenden zumindest eine einstellbare Erntegutbehandlungsmittel (31), die wenigstens eine Aktuatorik (32) zur Einstellung und/oder Betätigung des zumindest einen Erntegutbehandlungsmittels (31) sowie die Steuereinheit (33) zur Ansteuerung der Aktuatorik (32) jeweils einen Einstellautomat (A₁, A₂, A₃, A₄, Aₙ) bilden, wobei durch das Fahrerassistenzsystem (25) die Arbeitsweise jedes Einstellautomaten (A₁, A₂, A₃, A₄, Aₙ) für sich genommen oder in Abhängigkeit von zumindest einem weiteren Einstellautomaten (A₁, A₂, A₃, A₄, Aₙ) optimierbar ist, wobei das Fahrerassistenzsystem (25) dazu eingerichtet ist, dem jeweiligen Einstellautomaten (A₁, A₂, A₃, A₄, Aₙ) ein durch zumindest eine Sensoranordnung (41, 42, 43) bestimmbares durchsatzproportionales Belastungssignal (40) des Antriebsystems (20) zuzuführen.

2. Feldhäcksler (1) nach Anspruch 1, **dadurch gekennzeichnet, dass** zur Bestimmung des zumindest einen durchsatzproportionalen Belastungssignals (40) zumindest einem Arbeitsorgan (6, 10, 11, 30) in dem Hauptantriebsstrang zumindest eine Sensoranordnung (41, 42) zugeordnet ist, um Veränderungen in der Leistungsaufnahme des zumindest einen Arbeitsorgans (6, 10, 11, 30) zu detektieren.

3. Feldhäcksler (1) nach Anspruch 1 oder 2, **dadurch gekennzeichnet, dass** zur Bestimmung des zumindest einen durchsatzproportionalen Belastungssignals (40) zumindest einem Arbeitsorgan (2, 3, 30) in dem Nebenantriebsstrang zumindest eine Sensoranordnung (43) zugeordnet ist, um Veränderungen in der Leistungsaufnahme des zumindest einen Arbeitsorgans (2, 3, 30) zu detektieren.

4. Feldhäcksler (1) nach Anspruch 1 bis 3, **dadurch gekennzeichnet, dass** die zumindest eine Sensoranordnung (41, 42, 43) dazu eingerichtet ist, von dieser aufgenommene Messsignale an das Fahrerassistenzsystem (25) zur Generierung von durchsatzproportionalen Belastungssignalen (40) zu übermitteln.

5. Feldhäcksler (1) nach einem der Ansprüche 1 bis 4, **dadurch gekennzeichnet, dass** die Einstellautomaten (A₁, A₂, A₃, A₄, Aₙ) dazu eingerichtet sind, das Belastungssignal (40) bzw. die Belastungssignale (40) bei der Optimierung des Leistungsbedarfs des jeweiligen Arbeitsorgans (30) zu verwenden.

6. Feldhäcksler (1) nach einem der vorangehenden Ansprüche, **dadurch gekennzeichnet, dass** die zumindest eine Sensoranordnung (41, 42, 43) zur indirekten Messung der Belastung des Antriebssystems (20) eingerichtet ist.

7. Feldhäcksler (1) nach einem der Ansprüche 1 bis 6, **dadurch gekennzeichnet, dass** die zumindest eine Sensoranordnung (41) zur Bestimmung von Dehnungsschlupf in einem Antriebsriemen (20a) vor und hinter einer Riemenscheibe (44) des Hauptantriebsstrangs eingerichtet ist.

8. Feldhäcksler (1) nach Anspruch 7, **dadurch gekennzeichnet, dass** die Sensoranordnung (41) zumindest eine einer Riemenscheibe (44) des zumindest einen Arbeitsorgans (6, 10, 11, 30) im Hauptantriebsstrang nachgeordnete Laufrolle (45) umfasst, deren Drehzahl von Sensoren (45) erfasst wird, und dass die Drehzahl der Riemenscheibe (44) des Arbeitsorgans (6, 10, 11, 30) mittelbar oder unmittelbar sensorisch erfassbar ist.

9. Feldhäcksler (1) nach einem der Ansprüche 1 bis 6, **dadurch gekennzeichnet, dass** die zumindest eine Sensoranordnung (42) zur Bestimmung von Biegeschwingungen in einem Antriebsriemen (20a) des Hauptantriebsstrangs eingerichtet ist.

10. Feldhäcksler (1) nach Anspruch 9, **dadurch gekennzeichnet, dass** die zumindest eine Sensoranordnung (42) zwei Abstandssensoren (54) umfasst, wobei jeweils ein Abstandssensor (54) dem Leertrum (48) vor dem zumindest einen Arbeitsorgan (6, 10, 11, 30) und dem Lasttrum (49) hinter dem Arbeitsorgan (6, 10, 11, 30) zugeordnet ist, mittels derer eine Auslenkung des Antriebsriemens (20a) des Hauptantriebsstrangs bestimmbar ist.

11. Feldhäcksler (1) nach einem der Ansprüche 1 bis 6, **dadurch gekennzeichnet, dass** die zumindest eine Sensoranordnung (43) zur Bestimmung einer hydraulischen Leistung von zumindest einem in dem Nebenantriebsstrang des Antriebsystems (20) angeordneten Hydraulikmotor (29) eingerichtet ist.

12. Feldhäcksler (1) nach Anspruch 11, **dadurch gekennzeichnet, dass** die zumindest eine Sensoranordnung (43) zwei Drucksensoren (58) umfasst, von denen einer dem zumindest einen Hydraulikmotor (29) vorgeordnet und der andere nachgeordnet ist.

13. Feldhäcksler (1) nach Anspruch 11 oder 12, **dadurch gekennzeichnet, dass** der Hydraulikmotor (29) als ein Konstantmotor ausgeführt ist.

## Claims

1. A forage harvester (1) including:
- a plurality of working members (2, 3, 6, 10, 11, 30) for carrying out a crop material processing process,
- a drive system (20) which is divided into a main drive train which includes mechanically driven working members (6, 10, 11, 30) and a secondary drive train which includes at least partially hydraulically driven drive members (2, 3),
- a driver assist system (25) which has a memory (28) for storing data and a computing device (37) for processing data stored in the memory as well as a graphical user interface (39),
**characterised in that** the working members (2, 3, 6, 10, 11, 30) each include at least one adjustable crop material handling means (31), at least one actuator (32) for setting and/or actuating the at least one crop material handling means (31) and a control unit (33) for actuation of the actuator (32),
wherein the at least one adjustable crop material handling means (31) forming the respective working member (2, 3, 6, 10, 11, 30), the at least one actuator (32) for setting and/or actuating the at least one crop material handling means (31) and the control unit (33) for actuation of the actuator (32) respectively form an automatic setting device (A₁, A₂, A₃, A₄, Aₙ), wherein the mode of operation of each automatic setting device (A₁, A₂, A₃, A₄, Aₙ) can be optimised in itself or in dependence on at least one further automatic setting device (A₁, A₂, A₃, A₄, Aₙ) by the driver assist system (25), wherein the driver assist system (25) is adapted to feed to the respective automatic setting device (A₁, A₂, A₃, A₄, Aₙ) a throughput-proportional load signal (40) of the drive system (20), that can be determined by at least one sensor arrangement (41, 42, 43).

2. A forage harvester (1) according to claim 1 **characterised in that** for determining the at least one throughput-proportional load signal (40) at least one sensor arrangement (41, 42) is associated with at least one working member (6,10, 11, 30) in the main drive train in order to detect changes in the power consumption of the at least one working member (6, 10, 11, 30).

3. A forage harvester (1) according to claim 1 or claim 2 **characterised in that** for determining the at least one throughput-proportional load signal (40) at least one sensor arrangement (43) is associated with at least one working member (2, 3, 30) in the secondary drive train in order to detect changes in the power consumption of the at least one working member (2, 3, 30).

4. A forage harvester (1) according to claims 1 to 3 **characterised in that** the at least one sensor arrangement (41, 42, 43) is adapted to communicate measurement signals recorded by same to the driver assist system (25) to generate throughput-proportional load signals (40).

5. A forage harvester (1) according to one of claims 1 to 4 **characterised in that** the automatic setting devices (A₁, A₂, A₃, A₄, Aₙ) are adapted to use the load signal (40) or the load signals (40) in optimisation of the power demand of the respective working member (30).

6. A forage harvester (1) according to one of the preceding claims **characterised in that** the at least one sensor arrangement (41, 42, 43) is adapted for indirect measurement of the load on the drive system (20).

7. A forage harvester (1) according to one of claims 1 to 6 **characterised in that** the at least one sensor arrangement (41) is adapted to determine stretch slip in a drive belt (20a) upstream and downstream of a belt pulley (44) of the main drive train.

8. A forage harvester (1) according to claim 7 **characterised in that** the sensor arrangement (41) includes at least one roller (45) which is disposed downstream of a belt pulley (44) of the at least one working member (6, 20, 11, 30) and the rotary speed of which is detected by sensors (45) and the rotary speed of the belt pulley (44) of the working member (6, 10, 11, 30) can be directly or indirectly detected by sensor means.

9. A forage harvester (1) according to one of claims 1 to 6 **characterised in that** the at least one sensor arrangement (42) is adapted to determine flexural vibrations in a drive belt (20a) of the main drive train.

10. A forage harvester (1) according to claim 9 **characterised in that** the at least one sensor arrangement (42) includes two spacing sensors (54), wherein a respective spacing sensor (54) is associated with the slack run (48) upstream of the at least one working member (6, 10, 11, 30) and the load run (49) downstream of the working member (6, 10, 11, 30), by means of which sensors a deflection of the drive belt (20a) of the main drive train can be determined.

11. A forage harvester (1) according to one of claims 1 to 6 **characterised in that** the at least one sensor arrangement (43) is adapted to determine a hydraulic power of at least one hydraulic motor (29) arranged in the secondary drive train of the drive system (20).

12. A forage harvester (1) according to claim 11 **characterised in that** the at least one sensor arrangement (43) includes two pressure sensors (58) of which one is arranged upstream of the at least one hydraulic motor (29) and the other is arranged downstream.

13. A forage harvester (1) according to claim 11 or claim 12 **characterised in that** the hydraulic motor (29) is in the form of a fixed displacement motor.

## Revendications

1. Ensileuse (1) incluant
- plusieurs organes de travail (2, 3, 6, 10, 11, 30) pour exécuter un processus de traitement de produit récolté,
- un système d'entraînement (20) qui est divisé en une chaîne de transmission principale, qui inclut des organes de travail entraînés mécaniquement (6, 10, 11, 30), et une chaîne de transmission auxiliaire, qui inclut des organes de travail entraînés au moins en partie hydrauliquement (2, 3),
- un système d'assistance à la conduite (25) qui comporte une mémoire (38) pour enregistrer des données et un dispositif de calcul (37) pour traiter des données enregistrées dans la mémoire ainsi qu'une interface utilisateur graphique (39),
**caractérisée en ce que**
les organes de travail (2, 3, 6, 10, 11, 30) comportent respectivement au moins un moyen réglable de traitement de produit récolté (31), au moins un ensemble actionneur (32) pour régler et/ou actionner le au moins un moyen de traitement de produit récolté (31) ainsi qu'une unité de commande (33) pour commander l'ensemble actionneur (32),
[...] le mode de travail de chaque automate de réglage (A₁, A₂, A₃, A₄, Aₙ) étant optimisable en soi ou en fonction d'au moins un autre automate de réglage (A₁, A₂, A₃, A₄, Aₙ) par l'intermédiaire du système d'assistance à la conduite (25), le système d'assistance à la conduite (25) étant agencé pour envoyer à l'automate de réglage respectif (A₁, A₂, A₃, A₄, Aₙ) un signal de charge (40) du système d'entraînement (20) proportionnel au débit, déterminable par l'intermédiaire d'au moins un agencement de capteur (41, 42, 43).

2. Ensileuse (1) selon la revendication 1, **caractérisée en ce que**, pour déterminer le au moins un signal de charge (40) proportionnel au débit, au moins un agencement de capteur (41, 42) est associé au moins à un organe de travail (6, 10, 11, 30) dans la chaîne de transmission principale afin de détecter des modifications dans la puissance absorbée par le au moins un organe de travail (6, 10, 11, 30).

3. Ensileuse (1) selon la revendication 1 ou 2, **caractérisée en ce que**, pour déterminer le au moins un signal de charge (40) proportionnel au débit, au moins un agencement de capteur (43) est associé au moins à un organe de travail (2, 3, 30) dans la chaîne de transmission auxiliaire afin de détecter des modifications dans la puissance absorbée par le au moins un organe de travail (2, 3, 30).

4. Ensileuse (1) selon la revendication 1 à 3, **caractérisée en ce que** le au moins un agencement de capteur (41, 42, 43) est agencé pour transmettre au système d'assistance à la conduite (25) des signaux de mesure recueillis par celui-ci afin de générer des signaux de charge (40) proportionnels au débit.

5. Ensileuse (1) selon une des revendications 1 à 4, **caractérisée en ce que** les automates de réglage (A₁, A₂, A₃, A₄, Aₙ) sont agencés pour utiliser le signal de charge (40), respectivement les signaux de charge (40) lors de l'optimisation du besoin de puissance de l'organe de travail respectif (30).

6. Ensileuse (1) selon une des revendications précédentes, **caractérisée en ce que** le au moins un agencement de capteur (41, 42, 43) est agencé pour mesurer indirectement la charge du système d'entraînement (20).

7. Ensileuse (1) selon une des revendications 1 à 6, **caractérisée en ce que** le au moins un agencement de capteur (41) est agencé pour déterminer un glissement d'allongement dans une courroie d'entraînement (20a) avant et après une poulie (44) de la chaîne de transmission principale.

8. Ensileuse (1) selon la revendication 7, **caractérisée en ce que** l'agencement de capteur (41) inclut au moins un galet de roulement (45) qui est disposé en aval d'une poulie (44) du au moins un organe de travail (6, 10, 11, 30) dans la chaîne de transmission principale et dont la vitesse de rotation est enregistrée par des capteurs (45), et **en ce que** la vitesse de rotation de la poulie (44) de l'organe de travail (6, 10, 11, 30) est détectable par capteurs indirectement ou directement.

9. Ensileuse (1) selon une des revendications 1 à 6, **caractérisée en ce que** le au moins un agencement de capteur (42) est agencé pour déterminer des vibrations de flexion dans une courroie d'entraînement (20a) de la chaîne de transmission principale.

10. Ensileuse (1) selon la revendication 9, **caractérisée en ce que** le au moins un agencement de capteur (42) inclut deux capteurs de distance (54), respectivement un capteur de distance (54) étant associé au brin vide (48) avant le au moins un organe de travail (6, 10, 11, 30) et au brin en charge (49) après l'organe de travail (6, 10, 11, 30), au moyen desquels une déviation de la courroie d'entraînement (20a) de la chaîne de transmission principale peut être déterminée.

11. Ensileuse (1) selon une des revendications 1 à 6, **caractérisée en ce que** le au moins un agencement de capteur (43) est agencé pour déterminer une puissance hydraulique d'au moins un moteur hydraulique (29) disposé dans la chaîne de transmission auxiliaire du système d'entraînement (20).

12. Ensileuse (1) selon la revendication 11, **caractérisée en ce que** le au moins un agencement de capteur (43) inclut deux capteurs de pression (58) dont un est disposé en amont et l'autre en aval du au moins un moteur hydraulique (29).

13. Ensileuse (1) selon la revendication 11 ou 12, **caractérisée en ce que** le moteur hydraulique (29) est conformé en moteur à cylindrée constante.
